# EUROPÄISCHE PATENTSCHRIFT

(11) **EP 3 562 730 B1**
(45) Veröffentlichungstag und Bekanntmachung des Hinweises auf die Patenterteilung: **23.09.2020**
(21) Anmeldenummer: 18723438.0
(22) Anmeldetag: 27.04.2018
(51) Int. Cl.: B62D 15/02, B60W 30/06, B60W 50/08

(54) **VERFAHREN ZUM AUTOMATISIERTEN PARKEN EINES KRAFTFAHRZEUGS**
METHOD FOR AUTOMATED PARKING A VEHICLE
PROCÉDÉ POUR GARER AUTOMATIQUEMENT UN VÉHICULE

(30) Priorität: 09.05.2017 DE 102017207805
(43) Veröffentlichungstag der Anmeldung: 06.11.2019
(73) Patentinhaber: Audi AG, 85045 Ingolstadt (DE)
(72) Erfinder: POPKEN, Markus, 85080 Gaimersheim (DE); KRETSCHMANN, Philipp, 85077 Manching (DE)
(86) Internationale Anmeldenummer: PCT/EP2018/060825
(87) Internationale Veröffentlichungsnummer: WO 2018/206310

(56) Entgegenhaltungen:
- EP-A2- 2 316 709
- DE-A1-102014 014 242

## Beschreibung

Die Erfindung betrifft ein Verfahren zum automatisierten Parken eines Kraftfahrzeugs. Daneben betrifft die Erfindung ein Kraftfahrzeug.

Das Parken von Kraftfahrzeugen wird von Fahrzeugführern häufig als lästige Aufgabe wahrgenommen, die sie nicht selbst übernehmen wollen. Daher ist es bekannt, in Fahrzeugen Assistenzsysteme vorzusehen, die einen Fahrer bei der Führung eines Kraftfahrzeugs in eine Parklücke unterstützen und beispielsweise die Längs- und/oder Querführung zumindest zum Teil übernehmen. Einige dieser Systeme können Kraftfahrzeuge auch vollautomatisch in eine Parklücke führen. Ein entsprechendes Vorgehen ist beispielsweise aus der Druckschrift DE 10 2011 114 317 A1 bekannt, wobei eine Führung des Kraftfahrzeugs in eine Parklücke sogar erfolgen kann, wenn sich der Fahrer außerhalb des Kraftfahrzeugs befindet. DE 10 2014 014242 A1 offenbart ein Verfahren nach dem Oberbegriff des Anspruchs 1.

Eine automatische Führung in eine Parklücke kann jedoch nur dann erfolgen, wenn eine entsprechende Lücke beziehungsweise ein definierter Parkplatz durch eine fahrzeugseitige Sensorik erkannt wurde oder beispielsweise in Kartendaten verzeichnet ist. Dies ist jedoch nicht in allen Betriebssituationen der Fall. Soll ein Kraftfahrzeug beispielsweise auf einem großen offenen Hof abgestellt werden, so kann eine derartige automatische Führung nicht durchgeführt werden.
Der Erfindung liegt somit die Aufgabe zugrunde, ein automatisiertes Parken in möglichst vielen Nutzungssituationen zu ermöglichen.
Die Aufgabe wird erfindungsgemäß durch ein Verfahren zum automatisierten Parken eines Kraftfahrzeugs gelöst, das die folgenden Schritte umfasst:
- Vorgabe einer zu nutzenden Parkposition innerhalb einer Parkfläche durch einen Nutzer mit Hilfe einer Vorgabeeinrichtung, und
- automatisches Parken des Kraftfahrzeugs an der Parkposition durch eine Steuereinrichtung.

Erfindungsgemäß wird vorgeschlagen, dass ein Nutzer mit Hilfe einer, insbesondere separat vom Kraftfahrzeug ausgebildeten, Vorgabeeinrichtung angeben kann, wo das Kraftfahrzeug geparkt werden soll. Beispielsweise kann sich ein Fahrer bereits außerhalb des Kraftfahrzeugs befinden und mit Hilfe der Vorgabeeinrichtung dem Kraftfahrzeug mitteilen, an welcher Position das Kraftfahrzeug geparkt werden soll. Beispielsweise kann als Vorgabeeinrichtung ein Laserpointer genutzt werden, dessen Lichtfleck durch das Kraftfahrzeug erfassbar ist, wodurch eine Steuereinrichtung ermitteln kann, zu welcher Position das Kraftfahrzeug geführt werden soll. Alternativ kann beispielsweise eine Szene mit der Kamera eines Mobiltelefons aufgenommen werden und mit Hilfe eines Augmented Reality Interfaces kann eine Parkposition gewählt werden. Prinzipiell kann die Parkposition auch mit Hilfe von Kartendaten gewählt werden, was beispielsweise ebenfalls über ein Mobiltelefon erfolgen kann. Verschiedene Möglichkeiten zur Vorgabe der Parkposition werden später noch detailliert diskutiert.
Die Parkfläche kann beispielsweise ein Hof oder eine andere Stellfläche sein, die insbesondere keine Parkmarkierungen oder fest vorgegebene Parkplätze aufweist. Im erfindungsgemäßen Verfahren wird vorteilhaft ermöglicht, dass der Nutzer selbst bestimmt, wo und wie ein Kraftfahrzeug in einer solchen Fahrsituation geparkt werden soll.
Die Parkfläche ist vorzugsweise eine zusammenhängende Parkfläche. Es ist erfindungsgemäss jedoch auch möglich, dass bei Wahl der Parkposition einerseits bestimmt wird, auf welche von mehreren Parkflächen das Kraftfahrzeug abgestellt werden soll, und andererseits wo auf dieser Parkfläche beziehungsweise in welcher Orientierung das Kraftfahrzeug abgestellt werden soll.

Die Steuereinrichtung kann insbesondere eine Steuereinrichtung des Kraftfahrzeugs sein, die dazu eingerichtet ist, das Kraftfahrzeug zumindest teilautomatisiert zu führen. Unter einer teilautomatisierten Führung ist hierbei eine Führung des Kraftfahrzeugs zu verstehen, bei der sowohl die Quer- als auch die Längsführung durch die Steuereinrichtung übernommen werden. Bei einer teilautomatisierten Führung ist jedoch eine ständige Überwachung durch einen Fahrzeugführer erforderlich. Alternativ kann eine hoch- oder vollautomatisierte Führung des Kraftfahrzeugs zu der Parkposition erfolgen, bei der der Fahrer das Kraftfahrzeug nicht dauerhaft überwachen muss, sondern entweder mit ausreichender Zeitreserve auf eine notwendige Übernahme hingewiesen wird oder sich vollständig darauf verlassen kann, dass stets ein risikominimaler Systemzustand für das Kraftfahrzeug erreicht werden kann. Definitionen für die genannten Automatisierungsgrade können beispielsweise dem Artikel "Rechtsfolgen zunehmender Fahrzeugautomatisierung" in der Veröffentlichung Forschung kompakt 11/12 der Bundesanstalt für Straßenwesen entnommen werden. Die Steuereinrichtung kann diverse Aktoren des Kraftfahrzeugs ansteuern, um die automatisierte Führung durchzuführen. Prinzipiell wäre es auch möglich, eine fahrzeugexterne Steuereinrichtung im Rahmen der Durchführung des erfindungsgemäßen Verfahrens zu nutzen. Beispielsweise könnte das Kraftfahrzeug durch eine Infrastruktureinrichtung geführt werden.

Die Parkposition kann als relative Position zu dem Kraftfahrzeug vorgegeben werden. Alternativ kann auch eine absolute Parkposition angegeben werden, wonach eine Relativposition aus einer Eigenposition des Kraftfahrzeugs, die beispielsweise über ein satellitenbasiertes Positionsbestimmungssystem ermittelt werden kann, und der absoluten Parkposition ermittelt werden kann. In einigen Fällen kann es auch zweckmäßig sein, die Parkposition relativ zu einem dritten Objekt, insbesondere zur Vorgabeeinrichtung, zu definieren. In diesem Fall kann entweder die absolute Position des dritten Objekts, also beispielsweise der Vorgabeeinrichtung, und in Abhängigkeit hiervon eine absolute Parkposition bestimmt werden, wonach wie vorangehend erläutert vorgegangen werden kann. Alternativ ist es auch möglich, zusätzlich eine relative Position des Kraftfahrzeugs zu dem dritten Objekt zu bestimmen. Beispielsweise kann das dritte Objekt durch eine Sensorik des Kraftfahrzeugs erfassbar werden oder umgekehrt. Aus den relativen Positionen des dritten Objekts zum Kraftfahrzeug und zu der Parkposition kann eine relative Parkposition zu dem Kraftfahrzeug bestimmt werden.
Die Parkposition kann frei oder mit einer vorgegebenen Ortsauflösung innerhalb der Parkfläche gewählt werden. Die Ortsauflösung kann beispielsweise genauer als zwei Meter, genauer als ein Meter oder genauer als 30 cm sein. Die Vorgabe kann somit insbesondere derart erfolgen, dass nicht ausschließlich zwischen einer geringen Zahl fest vorgegebenen Parkpositionen gewählt werden kann, sondern dass eine näherungsweise kontinuierliche Bestimmung der Parkposition möglich ist.

Im Rahmen der Vorgabe der Parkposition wird insbesondere auch eine Orientierung für das Kraftfahrzeug vorgegeben werden, in der das Kraftfahrzeug in der Parkposition abgestellt werden soll.
Durch die Vorgabeeinrichtung kann eine Bilddarstellung zumindest eines Abschnitts der Parkfläche für den Nutzer ausgegeben werden, wonach der Nutzer die Parkposition durch eine Bedieneingabe an der Vorgabeeinrichtung vorgibt. Die Ausgabe der Bilddarstellung kann beispielsweise über einen Touchscreen oder einen anderen Bildschirm erfolgen. Bedieneingaben können beispielsweise Berührungen eines Touchscreens oder Betätigungen von Knöpfen, Schaltern, Drehreglern oder ähnlichem an der Vorgabeeinrichtung sein. Die Bilddarstellung kann eine schematische Darstellung des Kraftfahrzeugs und seiner Umgebung sein, es kann jedoch auch eine fotorealistische Darstellung erfolgen.
Die Bilddarstellung kann das Kraftfahrzeug oder das Umfeld des Kraftfahrzeugs aus der Vogelperspektive darstellen. Das Kraftfahrzeug kann beispielsweise als vorgegebenes Symbol dargestellt werden, das mit Kartendaten oder einer in Abhängigkeit von erfassten Umfelddaten generierten Darstellung überlagert dargestellt wird.

Die Bilddarstellung kann aus Kartendaten generiert werden, die in der Steuereinrichtung oder einer anderen Komponente des Kraftfahrzeugs und/oder in der Vorgabeeinrichtung gespeichert sein können. Durch die Steuereinrichtung kann, beispielsweise durch Nutzung eines satellitenbasierten Positionsbestimmungssystems, eine Eigenposition des Kraftfahrzeugs ermittelt werden. Mit Hilfe dieser Eigenposition können aus einer Kartendatenbank Kartendaten entnommen werden, die die unmittelbare Umgebung des Kraftfahrzeugs betreffen. Diese können, insbesondere mit einer symbolischen Darstellung des Kraftfahrzeugs überlagert, als Bilddarstellung dargestellt werden. Es ist hierbei möglich, dass ausschließlich die Eigenposition des Kraftfahrzeugs an die Vorgabeeinrichtung übertragen wird und dort eine Auswahl der Kartendaten erfolgt. Es ist jedoch auch möglich, dass die Steuereinrichtung bereits Kartendaten auswählt und an die Vorgabeeinrichtung überträgt.

Die Vorgabeeinrichtung kann dazu eingerichtet sein, eine durch eine oder mehrere Bedieneingaben ausgewählte Parkposition an das Kraftfahrzeug beziehungsweise an dessen Steuereinrichtung zu übertragen.

Durch eine Kamera der Vorgabeeinrichtung können die Parkfläche betreffende Bilddaten erfasst werden, wonach die Ausgabe der Bilddarstellung in Abhängigkeit der Bilddaten erfolgt. Es ist möglich, dass das Kamerabild mittelbar dargestellt wird oder dass zunächst eine Vorverarbeitung erfolgt, um beispielsweise Zusatzinformationen zu überlagern, das Bild perspektivisch zu verzerren, Hindernisse und/oder nutzbare Parkflächen hervorzuheben, eine symbolische Darstellung des Kraftfahrzeugs an einer vorläufigen Parkposition darzustellen oder Ähnliches.

Vorzugsweise wird durch die Kamera auch das Kraftfahrzeug selbst erfasst, womit eine Relativposition zwischen Vorgabeeinrichtung und Kraftfahrzeug bestimmbar ist. Erfolgt eine Wahl der Parkposition bezüglich Bilddaten einer vorgabeeinrichtungsseitigen Kamera, so wird die Parkposition zunächst relativ zu der Vorgabeeinrichtung bestimmt. Durch zusätzliche Ermittlung der relativen Position des Kraftfahrzeugs zu der Vorgabeeinrichtung kann eine relative Position der Parkposition zu dem Kraftfahrzeug ermittelt und an die Steuereinrichtung bereitgestellt werden.

Eine Wahl der Parkposition anhand von Bilddaten, die durch die Vorgabeeinrichtung aufgenommen wurden, kann besonders intuitiv sein, da der Blickwinkel einer entsprechenden Kamera im Wesentlichen dem Blickwinkel des Nutzers entsprechen kann. Um eine robuste Zuordnung einzelner Bereiche dieser Bilddarstellung, insbesondere einzelner Pixel, zu bestimmten Parkpositionen zu erreichen, können aufgrund des typischerweise schrägen Aufnahmewinkels jedoch zusätzliche Verarbeitungsschritte erforderlich sein. Bei Bilddaten einer Kamera entsprechen Bildpunkte bestimmten Raumwinkeln, in denen sich ein Objekt aufhält. Parkpositionen sollen jedoch typischerweise auf zweidimensionalen Parkflächen festgelegt werden, die gewinkelt zu dem Aufnahmewinkel der Kamera stehen können. In einer Vielzahl von Anwendungsfällen kann es bereits möglich sein, eine Lage der Ebene der Parkfläche in den zweidimensionalen Bilddaten zu erkennen. In diesem Fall können die den einzelnen Bildpunkten zugeordneten Raumwinkel eindeutig bestimmten Positionen auf der Parkfläche zugeordnet werden. Eine Erkennung der Ebene der Parkfläche kann weiter verbessert werden, wenn vor, nach oder während der Bildaufnahme Lagedaten für die Vorgabeeinrichtung ermittelt werden, die die Orientierung der Vorgabeeinrichtung im Raum beschreiben. Beispielsweise können hierfür in die Vorgabeeinrichtung integrierte Beschleunigungs- oder Magnetfeldsensoren genutzt werden. Ergänzend oder alternativ kann es vorteilhaft sein, Tiefeninformationen zu den einzelnen Bildpunkten zu gewinnen, indem beispielsweise Bilddaten mit mehreren Kameras aufgenommen werden und/oder eine Kamera genutzt wird, die entsprechende Tiefeninformationen bereitstellt, beispielsweise eine Time of Flight-Kamera.

Im Rahmen der Vorgabe der Parkposition kann eine erste Bedieneingabe des Nutzers erfasst werden, wonach wenigstens ein Graphikelement an einer von der Bedieneingabe abhängenden Position in die Bilddarstellung eingeblendet wird, wobei nach Erfassung einer zweiten Bedieneingabe das automatische Parken begonnen wird. Das Graphikelement kann beispielsweise eine vorläufig gewählte Parkposition beziehungsweise ein Modell des Kraftfahrzeugs an dieser Position darstellen. Ein Nutzer kann somit einfach beurteilen, ob die vorläufige Parkposition tatsächlich angesteuert werden soll oder ob er diese vorläufige Parkposition anpassen möchte. Die Überlagerung des Graphikelements kann mit besonderem Vorteil dann erfolgen, wenn die Bilddarstellung in Abhängigkeit von Bilddaten einer Kamera ausgegeben wird. Durch das Einblenden des Graphikelements beziehungsweise der Graphikelemente kann eine sogenannte Augmented Reality-Darstellung realisiert werden, bei der zusätzliche Informationen mit einer Darstellung der realen Welt überlagert dargestellt werden.

Durch den Nutzer wird die Vorgabeeinrichtung derart bedient, dass durch die Vorgabeeinrichtung ein Lichtmuster auf die Parkfläche projiziert wird, wobei das Lichtmuster durch eine Erfassungseinrichtung des Kraftfahrzeugs erfasst und die Parkposition in Abhängigkeit einer Beleuchtungsposition ermittelt werden kann, an der das Lichtmuster die Parkfläche beleuchtet. Beispielsweise kann die Vorgabeeinrichtung ein Laserpointer sein oder sie kann einen Laserpointer umfassen. Der Benutzer kann insbesondere die Position und/oder Ausrichtung der Vorgabeeinrichtung anpassen, um zu bestimmen, an welche Position der Parkfläche das Lichtmuster projiziert wird. Soll zusätzlich eine Ausrichtung des Kraftfahrzeugs in der Parkposition bestimmt werden, wird ein gerichtetes Muster, beispielsweise ein Pfeil oder Ähnliches, projiziert werden. Bei der Nutzung eines Laserpointers kann beispielsweise ein optisches Gitter genutzt werden, um eine Bilddarstellung am Auftreffpunkt zu erreichen.

Das Beleuchten der gewünschten Parkposition ermöglicht es einem Nutzer auf besonders intuitive Weise festzulegen, wo das Kraftfahrzeug parken soll. Zudem kann die Vorgabeeinrichtung sehr einfach aufgebaut sein und es können Ressourcen genutzt werden, die in Kraftfahrzeugen typischerweise ohnehin vorhanden sind, beispielsweise Kameras zur Erfassung des Umfelds und Bildverarbeitungseinrichtungen, die insbesondere Objekte und somit auch die projizierten Lichtmuster erkennen können. Eine Beleuchtung eines Umfeldbereichs mit relativ hoher Lichtintensität, wie sie beispielsweise durch einen Laser bereitgestellt wird, ist durch eine entsprechende Bildverarbeitung leicht zu erkennen. Wurde ein entsprechendes Lichtmuster erkannt, ist somit ein Raumwinkel bekannt, in dem die gewünschte Parkposition bezüglich der bekannten Position und Ausrichtung der Kamera im Kraftfahrzeug liegt. Ist die Parkfläche im Wesentlichen flach, so kann durch einfache trigonometrische Berechnungen eine relative Position der Parkposition zu dem Kraftfahrzeug aus diesen Informationen bestimmt werden. Ansätze zur Erkennung von gekrümmten Fahrbahnen beziehungsweise Parkflächen durch kraftfahrzeugseitige Bildverarbeitungseinrichtungen sind zudem im Stand der Technik bekannt. Entsprechende Ansätze können genutzt werden, um den Verlauf der Parkfläche zu ermitteln. Es kann somit auch in diesen Fällen eine robuste Ermittlung der Parkposition erfolgen.

Wird die Parkposition anhand eines projizierten Lichtmusters festgelegt, ist es vorteilhaft, wenn die Führung des Kraftfahrzeugs zu der Parkposition erst dann erfolgt, wenn ein Betätigungssignal gegeben wird. Dies kann beispielsweise durch einen Funkschlüssel des Kraftfahrzeugs, ein Mobiltelefon, oder ähnliches erfolgen. Der Nutzer kann somit die Projektion des Lichtmusters aktivieren, es in aller Ruhe positionieren und anschließend die Führung des Kraftfahrzeugs zu der ausgeleuchteten Position auszulösen.

Die Vorgabeeinrichtung kann ein Mobiltelefon sein oder sie kann ein Mobiltelefon umfassen. Dies ist besonders dann vorteilhaft, wenn eine Auswahl der Parkposition mit Hilfe einer Bilddarstellung erfolgen soll, da Mobiltelefone häufig ohnehin Touchscreens aufweisen. Zudem sind bereits Kommunikationsmittel vorhanden, über die mit dem Kraftfahrzeug kommuniziert werden kann. Beispielsweise kann ein beliebiges Smartphone durch Installation einer entsprechenden Software beziehungsweise App als Vorgabeeinrichtung nutzbar sein, womit das erfindungsgemäße Verfahren mit geringem technischen Aufwand umgesetzt werden kann.

Wie bereits erwähnt, kann eine Vorgabeeinrichtung verwendet werden, die separat von dem Kraftfahrzeug ausgebildet ist. Hierdurch wird es ermöglicht, dass der Nutzer die Parkposition festlegt, während er sich außerhalb des Kraftfahrzeugs aufhält.

Nach dem Erreichen der Parkposition können eine Antriebseinrichtung des Kraftfahrzeugs deaktiviert und/oder ein Parkgang eines automatischen Getriebes des Kraftfahrzeugs eingelegt und/oder eine Feststellbremse des Kraftfahrzeugs aktiviert und/oder ein Bordnetz zumindest teilweise stromfrei geschaltet und/oder in einen Energiesparmodus versetzt werden. Dies erspart dem Nutzer zusätzlich Bedienhandlungen.

Neben dem erfindungsgemäßen Verfahren betrifft die Erfindung ein Kraftfahrzeug mit einer Steuereinrichtung, die zum automatischen Einparken des Kraftfahrzeugs an einer vorgegebenen Parkposition eingerichtet ist, wobei die Steuereinrichtung zur Durchführung des erfindungsgemäßen Verfahrens eingerichtet ist.

Das Kraftfahrzeug kann insbesondere eine Kamera umfassen, um ein projiziertes Lichtmuster zu erfassen, das wie vorangehend erläutert genutzt werden kann, um eine Parkposition vorzugeben. Ergänzend oder alternativ kann die Steuereinrichtung dazu eingerichtet sein, über eine kraftfahrzeugseitige Kommunikationseinrichtung mit der Vorgabeeinrichtung zu kommunizieren. Dies ist insbesondere dann vorteilhaft, wenn die Parkposition durch Bedieneingaben an der Vorgabeeinrichtung, beispielsweise durch eine Auswahl in einer Bilddarstellung, vorgegeben werden soll.

Weitere Vorteile und Einzelheiten der Erfindung ergeben sich aus den im Folgenden beschriebenen Ausführungsbeispielen sowie den zugehörigen Zeichnungen. Hierbei zeigen schematisch:
- Fig. 1: ein Ausführungsbeispiel eines erfindungsgemäßen Kraftfahrzeugs in einer Fahrsituation, in der ein Ausführungsbeispiel des erfindungsgemäßen Verfahrens durchgeführt wird, und
- Fig. 2 und 3: Bildschirmdarstellung an einer Vorgabeeinrichtung in weiteren Ausführungsbeispielen des erfindungsgemäßen Verfahrens.

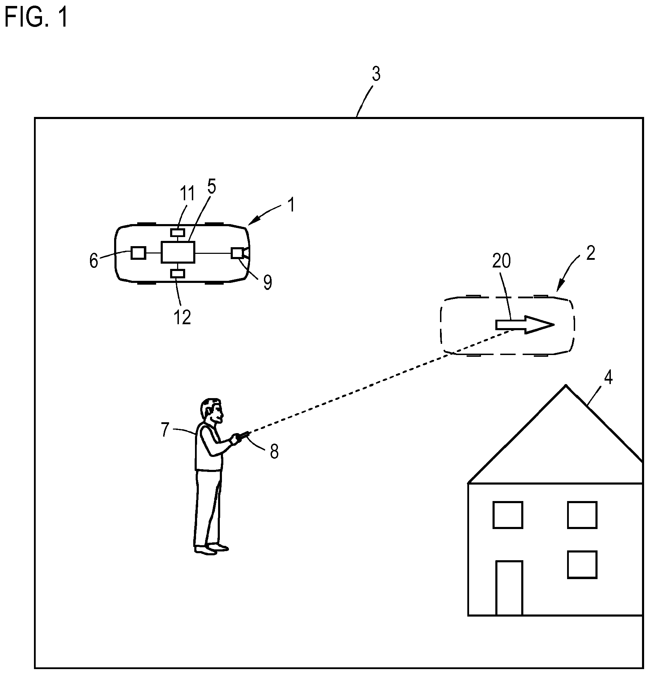

Fig. 1 zeigt eine Fahrsituation, in der ein Kraftfahrzeug 1 in eine Parkposition 2 geführt werden soll. Das Kraftfahrzeug 1 befindet sich hierbei auf einer ausgedehnten Parkfläche 3, auf der abgesehen vom Bereich eines Hindernisses 4, nämlich eines Hauses, ein wahlfreies Parken möglich ist. Der Parkvorgang selbst wird durch eine Steuereinrichtung 5 automatisch ausgeführt, wobei hierzu eine Aktorik 6 des Kraftfahrzeugs 1 gesteuert wird, um einen automatisierten Fahrbetrieb zu realisieren.

Die Parkposition 2, in der das Kraftfahrzeug 1 geparkt wird, soll durch einen Nutzer 7 frei wählbar sein. Dies wird dadurch erreicht, dass der Nutzer 7 die Parkposition mit Hilfe einer Vorgabeeinrichtung 8 vorgibt. Als Vorgabeeinrichtung 8 wird ein Laserpointer genutzt, der jedoch ein drehbares optisches Gitter aufweist, um ein Lichtmuster 20 projizieren zu können, das eine eindeutige Orientierung aufweist. Hierdurch wird neben der Parkposition 2 auch eine Orientierung für das Kraftfahrzeug 1 vorgegeben, in der es an der Parkposition 2 parken soll. Optional wäre es auch möglich, einen unmodifizierten Laserpointer oder eine andere Lichtquelle zu nutzen, und die Orientierung des Kraftfahrzeugs 1 wahlfrei zu lassen oder durch andere Parameter vorzugeben.

Das Lichtmuster 20 wird durch eine Erfassungseinrichtung 9 des Kraftfahrzeugs 1, insbesondere eine Kamera, erfasst. Aus dem Raumwinkel bezüglich des Kraftfahrzeugs, in dem das Lichtmuster 20 erfasst wird, und der bekannten Position und Orientierung der Kamera am Kraftfahrzeug 1 können durch die Steuereinrichtung 5 eine relative Position des Lichtmusters 20 zum Kraftfahrzeug 1 und somit die gewünschte Parkposition 2 ermittelt werden. Das Kraftfahrzeug 1 kann anschließend durch Ansteuerung der Aktorik 6 zu der Parkposition 2 geführt werden. Die automatisierte Führung des Kraftfahrzeugs 1 erfolgt wie im Stand der Technik üblich und soll daher nicht detailliert erläutert werden.

Im Kraftfahrzeug 1 sind zudem eine Kommunikationseinrichtung 11 und eine satellitenbasierte Positionsbestimmungseinrichtung 12 vorgesehen. Diese können genutzt werden, um alternative Vorgabeeinrichtungen beziehungsweise Ansätze zur Vorgabe der Parkposition zu nutzen, für die im Folgenden einige Beispiele erläutert werden.

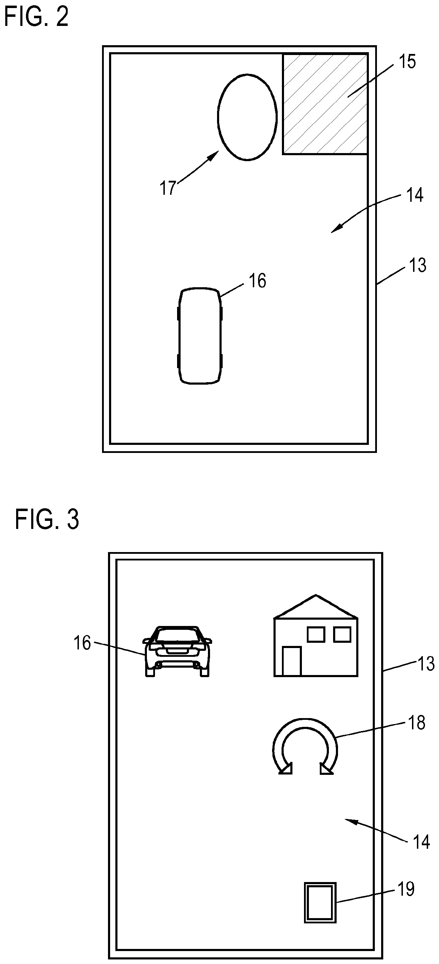

Fig. 2 zeigt eine alternative Vorgabeeinrichtung 13, nämlich ein Mobiltelefon. Auf einem Touchscreen 14 des Mobiltelefons wird ein Abschnitt der Parkfläche 3 dargestellt. Dies wird dadurch ermöglicht, dass die Steuereinrichtung 5 des Kraftfahrzeugs 1 mit Hilfe der Positionsbestimmungseinrichtung 12 eine Eigenposition des Kraftfahrzeugs 1 ermittelt und Kartendaten für die Umgebung des Kraftfahrzeugs in Abhängigkeit dieser Eigenposition aus einer Kartendatenbank auswählt und gemeinsam mit der Eigenposition an die Vorgabeeinrichtung 13 bereitstellt. Diese erzeugt hieraus eine Bilddarstellung des Kraftfahrzeugs 1 und des Umfelds des Kraftfahrzeugs 1 aus der Vogelperspektive, wobei das Hindernis 4 schematisch als nicht befahrbarer Bereich 15 dargestellt wird und ein Symbol als Graphikelement 16 für das Kraftfahrzeug 1 an der Position des Kraftfahrzeugs 1 dargestellt wird. Eine Parkposition kann anschließend durch Touchgesten gewählt werden. Ein Benutzer kann beispielsweise die Ellipse 17 auf dem Touchscreen 14 einzeichnen, wodurch festgelegt wird, dass das Kraftfahrzeug 1 im Bereich der Ellipse 17 abgestellt werden soll, also im Wesentlichen in der in Fig. 1 gezeigten Parkposition 2.

Es wären selbstverständlich auch andere Bedienkonzepte möglich. Beispielsweise kann das Symbol, das das Kraftfahrzeug 1 darstellt, an die gewünschte Parkposition gezogen werden. Durch bestimmte Touchgesten, beispielsweise ein Auflegen und Rotieren von zwei Fingern, kann das Symbol 16 auch gedreht werden, um eine Wunschorientierung für das Kraftfahrzeug 1 in der Parkposition 2 festzulegen.

Unabhängig von der Art der Festlegung der Parkposition kann es auch vorteilhaft sein, diese zunächst für einen Nutzer zu visualisieren und den automatischen Fahrbetrieb erst nach einer Bestätigung durch den Fahrer einzuleiten. Es ist auch möglich, dass die Führung des Kraftfahrzeugs 1 zu der Parkposition 2 durch eine entsprechende Verschiebung des Graphikelements 16 für den Nutzer visualisiert wird.

Fig. 3 zeigt das gleiche Mobiltelefon wie Fig. 2, wobei in der in Fig. 3 gezeigten Darstellung ein Verfahren zum automatisierten Parken genutzt wird, das sich bezüglich der Vorgabe der zu nutzenden Parkposition von dem vorangehend diskutierten Verfahren unterscheidet. Hierbei wird eine nicht gezeigte Kamera des Mobiltelefons genutzt, um einen Abschnitt der Parkfläche 3, in dem das Kraftfahrzeug 1 abgestellt werden soll, im Wesentlichen aus der Perspektive des Nutzers 7 aufzunehmen. Diese Aufnahme wird auf dem Touchscreen 14 dargestellt. Die tatsächliche aktuelle Position des Kraftfahrzeugs 1 liegt hierbei außerhalb des Bildbereichs. Das Graphikelement 16 zeigt eine momentan gewählte vorläufige Parkposition durch Darstellung eines Fahrzeugmodells. Durch ein Ziehen des Graphikelements 16 auf dem Touchscreen kann das Graphikelement 16 verschoben werden, wobei es stets perspektivisch dargestellt wird. Durch Berührung des Bedienelements 18 kann das dargestellte Fahrzeugmodell um die Hochachse rotiert werden, so dass eine Orientierung für das Kraftfahrzeug 1 in der Parkposition 2 vorgegeben werden kann.

Insgesamt resultiert somit eine Augmented Reality-Darstellung, die ein Modell des Kraftfahrzeugs 1 in einer vorläufigen Parkposition der realen Umgebung überlagert darstellt. Somit wird für einen Nutzer besonders intuitiv erfassbar, wo das Kraftfahrzeug abgestellt werden soll. Hat der Nutzer das Graphikelement 16 wie gewünscht positioniert und orientiert und somit die gewünschte Parkposition 2 festgelegt, kann durch Betätigung des virtuellen Bedienelements 19, das auf dem Touchscreen 14 dargestellt wird, der automatisierte Fahrbetrieb begonnen werden.

## Patentansprüche

1. Verfahren zum automatisierten Parken eines Kraftfahrzeugs (1), umfassend die Schritte:
- Vorgabe einer zu nutzenden Parkposition (2) innerhalb einer Parkfläche (3) durch einen Nutzer (7) mit Hilfe einer Vorgabeeinrichtung (8, 13),
- automatisches Parken des Kraftfahrzeugs (1) an der Parkposition (2) durch eine Steuereinrichtung (5),
**dadurch gekennzeichnet,**
**dass** durch den Nutzer (7) die Vorgabeeinrichtung (8) derart bedient wird, dass durch die Vorgabeeinrichtung (8) ein Lichtmuster (20), das eine eindeutige Orientierung aufweist, auf die Parkfläche (3) projiziert wird, wobei das Lichtmuster (20) durch eine Erfassungseinrichtung (9) des Kraftfahrzeugs erfasst und die Parkposition (2) in Abhängigkeit einer Beleuchtungsposition ermittelt wird, an der das Lichtmuster (20) die Parkfläche (3) beleuchtet, und wobei durch die Orientierung des Lichtmusters (20) eine Orientierung für das Kraftfahrzeug (1) vorgegeben wird, in der es an der Parkposition (2) parken soll.

2. Verfahren nach Anspruch 1,
**dadurch gekennzeichnet,**
**dass** die Parkposition (2) frei oder mit einer vorgegebenen Ortsauflösung innerhalb der Parkfläche (3) gewählt wird.

3. Verfahren nach Anspruch 1 oder 2,
**dadurch gekennzeichnet,**
**dass** durch die Vorgabeeinrichtung (13) eine Bilddarstellung zumindest eines Abschnitts der Parkfläche (3) für den Nutzer (7) ausgegeben wird, wonach der Nutzer (7) die Parkposition (2) durch eine Bedieneingabe an der Vorgabeeinrichtung (13) vorgibt.

4. Verfahren nach Anspruch 3,
**dadurch gekennzeichnet,**
**dass** die Bilddarstellung das Kraftfahrzeug (1) und das Umfeld des Kraftfahrzeugs (1) aus der Vogelperspektive darstellt.

5. Verfahren nach Anspruch 3 oder 4,
**dadurch gekennzeichnet,**
**dass** durch eine Kamera der Vorgabeeinrichtung (13) die Parkfläche (3) betreffende Bilddaten erfasst werden, wonach die Ausgabe der Bilddarstellung in Abhängigkeit der Bilddaten erfolgt.

6. Verfahren nach einem der Ansprüche 3 bis 5,
**dadurch gekennzeichnet,**
**dass** im Rahmen der Vorgabe der Parkposition (2) eine erste Bedieneingabe des Nutzers (7) erfasst wird, wonach wenigstens ein Graphikelement (16) an einer von der Bedieneingabe abhängenden Position in die Bilddarstellung eingeblendet wird, wobei nach Erfassung einer zweiten Bedieneingabe das automatische Parken begonnen wird.

7. Verfahren nach einem der vorangehenden Ansprüche,
**dadurch gekennzeichnet,**
**dass** die Vorgabeeinrichtung (8) ein Laserpointer ist oder dass sie einen Laserpointer umfasst.

8. Verfahren nach einem der vorangehenden Ansprüche,
**dadurch gekennzeichnet,**
**dass** die Vorgabeeinrichtung (13) ein Mobiltelefon ist oder dass sie ein Mobiltelefon umfasst.

9. Verfahren nach einem der vorangehenden Ansprüche,
**dadurch gekennzeichnet,**
**dass** eine Vorgabeeinrichtung (8, 13) verwendet wird, die separat von dem Kraftfahrzeug (1) ausgebildet ist.

10. Verfahren nach einem der vorangehenden Ansprüche,
**dadurch gekennzeichnet,**
**dass** nach dem Erreichen der Parkposition (2) eine Antriebseinrichtung des Kraftfahrzeugs (1) deaktiviert und/oder ein Parkgang eines automatischen Getriebes des Kraftfahrzeugs (1) eingelegt und/oder eine Feststellbremse des Kraftfahrzeugs (1) aktiviert und/oder ein Bordnetz zumindest teilweise stromfrei geschaltet und/oder in einen Energiesparmodus versetzt wird.

11. Kraftfahrzeug mit einer Steuereinrichtung (5), die zum automatischen Einparken des Kraftfahrzeugs (1) an einer vorgegebenen Parkposition (2) eingerichtet ist,
**dadurch gekennzeichnet,**
**dass** die Steuereinrichtung (5) zur Durchführung eines Verfahrens nach einem der vorangehenden Ansprüche eingerichtet ist.

## Claims

1. Method for the automated parking of a motor vehicle (1), comprising the steps:
- specification of a parking position (2) within a parking area (3) on the part of a user (7) with the aid of a specification device (8, 13),
- automatic parking of the motor vehicle (1) at the parking position (2) by a control device (5),
**characterised in**
**that** the specification device (8) is operated by the user (7) such that by means of the specification device (8) a light pattern (20) which has an unambiguous orientation is projected onto the parking area (3), wherein the light pattern (20) is detected by a detecting device (9) of the motor vehicle, and the parking position (2) is determined depending on a lighting position at which the light pattern (20) illuminates the parking area (3), and wherein by means of the orientation of the light pattern (20) an orientation is specified for the motor vehicle (1) in which it should park at the parking position (2).

2. Method according to claim 1,
**characterised in**
**that** the parking position (2) is selected freely or with a specified local resolution within the parking area (3).

3. Method according to claim 1 or 2,
**characterised in**
**that** by means of the specification device (13) an image representation of at least one section of the parking area (3) is outputted for the user (7), according to which the user (7) specifies the parking position (2) by means of an operating input on the specification device (13).

4. Method according to claim 3,
**characterised in**
**that** the image representation represents the motor vehicle (1) and the environment of the motor vehicle (1) from the birds-eye perspective.

5. Method according to claim 3 or 4,
**characterised in**
**that** image data concerning the parking area (3) are captured by a camera of the specification device (13), according to which the output of the image representation takes place depending on the image data.

6. Method according to any of claims 3 to 5,
**characterised in**
**that** in the context of the specification of the parking position (2) a first operating input of the user (7) is detected, according to which at least one graphic element (16) is faded in at a position in the image representation which depends on the operating input, wherein the automatic parking is started after detection of a second operating input.

7. Method according to any of the preceding claims,
**characterised in**
**that** the specification device (8) is a laser pointer or that it includes a laser pointer.

8. Method according to any of the preceding claims,
**characterised in**
**that** the specification device (13) is a mobile telephone or that it includes a mobile telephone.

9. Method according to any of the preceding claims,
**characterised in**
**that** a specification device (8, 13) is used which is designed separately from the motor vehicle (1).

10. Method according to any of the preceding claims,
**characterised in**
**that** after the reaching of the parking position (2) a drive device of the motor vehicle (1) is deactivated and/or a parking gear of an automatic transmission of the motor vehicle (1) is selected and/or a parking brake of the motor vehicle (1) is activated and/or an on-board electrical system is at least in part switched to current-free and/or is set into an energy saving mode.

11. Motor vehicle having a control device (5) which is configured for the automatic parking of the motor vehicle (1) at a specified parking position (2),
**characterised in**
**that** the control device (5) is configured to carry out a method according to any of the preceding claims.

## Revendications

1. Procédé de stationnement automatisé d'un véhicule automobile (1), comprenant les étapes de :
- détermination d'une position de stationnement (2) à utiliser au sein d'une aire de stationnement (3) par un utilisateur (7) au moyen d'un dispositif de détermination (8, 13),
- stationnement automatique du véhicule automobile (1) à la position de stationnement (2) par un dispositif de commande (5),
**caractérisé en ce que**
l'utilisateur (7) actionne le dispositif de détermination (8) de sorte qu'un motif lumineux (20) présentant une orientation claire est projeté sur l'aire de stationnement (3) par le dispositif de détermination (8), le motif lumineux (20) étant détecté par un dispositif de détection (9) du véhicule automobile et la position de stationnement (2) étant déterminée en fonction d'une position d'éclairage, le motif lumineux (20) éclairant l'aire de stationnement (3), et l'orientation du motif lumineux (20) déterminant une orientation pour le véhicule automobile (1) dans laquelle il doit se garer à la position de stationnement (2).

2. Procédé selon la revendication 1,
**caractérisé en ce que**
la position de stationnement (2) est sélectionnée librement ou avec une résolution spatiale prédéterminée au sein de l'aire de stationnement (3).

3. Procédé selon la revendication 1 ou 2,
**caractérisé en ce que**
une représentation d'image d'au moins une section de l'aire de stationnement (3) est émise pour l'utilisateur (7) par le dispositif de détermination (13), après quoi l'utilisateur (7) détermine la position de stationnement (2) au moyen d'une entrée de commande sur le dispositif de détermination (13).

4. Procédé selon la revendication 3,
**caractérisé en ce que**
la représentation d'image représente le véhicule automobile (1) et l'environnement du véhicule automobile (1) d'un point de vue aérien.

5. Procédé selon la revendication 3 ou 4,
**caractérisé en ce que**
les données d'image relatives à l'aire de stationnement (3) sont enregistrées par une caméra du dispositif de détermination (13), après quoi l'émission de la représentation d'image est effectuée en fonction des données d'image.

6. Procédé selon l'une quelconque des revendications 3 à 5,
**caractérisé en ce que**
une première entrée de commande de l'utilisateur (7) est détectée dans le cadre de la détermination de la position de stationnement (2), après quoi au moins un élément graphique (16) est inséré dans la représentation d'image à une position dépendant de l'entrée de commande, le stationnement automatique étant lancé après la détection d'une seconde entrée de commande.

7. Procédé selon l'une quelconque des revendications précédentes,
**caractérisé en ce que**
le dispositif de détermination (8) est un pointeur laser ou qu'il comprend un pointeur laser.

8. Procédé selon l'une quelconque des revendications précédentes,
**caractérisé en ce que**
le dispositif de détermination (13) est un téléphone mobile ou qu'il comprend un téléphone mobile.

9. Procédé selon l'une quelconque des revendications précédentes,
**caractérisé en ce que**
un dispositif de détermination (8, 13) est utilisé, qui est conçu séparément du véhicule automobile (1).

10. Procédé selon l'une quelconque des revendications précédentes,
**caractérisé en ce que**
une fois la position de stationnement (2) atteinte, un dispositif de propulsion du véhicule automobile (1) est désactivé et/ou un rapport de stationnement d'une transmission automatique du véhicule automobile (1) est engagé et/ou un frein de stationnement du véhicule automobile (1) est activé et/ou un réseau de bord est commuté au moins partiellement sans courant et/ou est passé en mode économie d'énergie.

11. Véhicule automobile avec un dispositif de commande (5) qui est réglé pour garer automatiquement le véhicule automobile (1) dans une position de stationnement (2) prédéterminée,
**caractérisé en ce que**
le dispositif de commande (5) est configuré pour exécuter un procédé selon l'une quelconque des revendications précédentes.
